# EUROPÄISCHE PATENTANMELDUNG

(11) **EP 3 502 517 A1**
(43) Veröffentlichungstag der Anmeldung: **26.06.2019**
(21) Anmeldenummer: 17208440.2
(22) Anmeldetag: 19.12.2017
(51) Int. Cl.: F16H 57/08, F03D 1/06, F16H 57/025

(54) **PLANETENGETRIEBE MIT VERBESSERTER STÜTZSTRUKTUR, ANTRIEBSSTRANG UND WINDKRAFTANLAGE**

(71) Anmelder: Flender GmbH, 46395 Bocholt (DE)
(72) Erfinder: KLEIN-HITPASS, Arno, 52074 Aachen (DE)
(74) Vertreter: Maier, Daniel Oliver

(57) **Zusammenfassung**

Die Erfindung betrifft ein Planetengetriebe (10), das mindestens eine Planetenstufe (20) mit einem Hohlrad (16) in einem Hohlradträger (18) umfasst. Der Hohlradträger (18) ist beidseitig axial mit je einer Gehäusekomponente (12, 14) verbunden. Das Planetengetriebe (10) umfasst auch eine Mehrzahl an Stützarmen (22) zur Abstützung des Planetengetriebes (10). Erfindungsgemäß weist das Planetengetriebe (10) mindestens drei Stützarme (22) auf.

## Beschreibung

Die Erfindung betrifft ein Planetengetriebe mit einer verbesserten Stützstruktur, durch die die Leistungsfähigkeit des Planetengetriebes gesteigert wird. Die Erfindung betrifft auch einen Antriebsstrang für eine Windkraftanlage, der mit dem erfindungsgemäßen Planetengetriebe ausgestattet ist. Gleichermaßen betrifft die Erfindung eine Windkraftanlage, die über einen solchen Antriebsstrang verfügt.

Aus EP 2 508 754 B1 ist ein Antriebssystem für eine Windkraftanlage bekannt, das ein Planetengetriebe umfasst. Das Planetengetriebe ist zweistufig ausgebildet und weist ein mehrteiliges Gehäuse auf. An einer Komponente des Gehäuses sind zwei Stützarme angeformt, die dazu dienen, das Planetengetriebe als Ganzes zu befestigen.

Die Offenlegungsschrift DE 197 14 528 A1 offenbart ein Umlaufgetriebe, das einen exzentrisch drehenden Planeten umfasst, der axial hintereinander in zwei Hohlräder eingreift. Das Umlaufgetriebe weist auch ein mehrteiliges Gehäuse auf, wobei benachbarte Gehäusekomponenten über Flansche miteinander axial verspannbar sind.

In der Getriebetechnik existiert die Zielsetzung, bei gleichbleibender oder rückläufiger Baugröße erhöhte mechanische Leistung durch ein Getriebe zu führen. Ebenso besteht die Zielsetzung, solche leistungsgesteigerten Getriebe in einfacher und kosteneffizienter Form herstellbar bereitzustellen. Ebenso werden erhöhte Lebensdauer, reduzierte Geräuschentwicklung und eine verbesserte Dichtwirkung angestrebt. Derartige Anforderungen bestehen insbesondere im Bereich der Planetengetriebe für Windkraftanlagen oder auch für Industrieanwendungen, beispielsweise Vertikalmühlen, Bergbauausrüstung oder in der Kunststofftechnik. Der Erfindung liegt die Aufgabe zugrunde, ein Planetengetriebe bereitzustellen, das in zumindest einem der skizzierten Punkte eine technische Verbesserung bietet. Eine weitere Aufgabenstellung besteht darin, einen entsprechend verbesserten Antriebsstrang für eine Windkraftanlage und eine solche Windkraftanlage bereitzustellen.

Die beschriebene Aufgabenstellung wird durch das erfindungsgemäße Planetengetriebe gelöst. Das Planetengetriebe umfasst mindestens eine Planetenstufe, die ein Hohlrad umfasst. Das Hohlrad ist dazu ausgebildet, dass darin mindestens ein umlaufendes Planetenrad eingreift und mit einer Sonnenwelle in Eingriff steht. Das Hohlrad ist in einem Hohlradträger aufgenommen, wobei das Hohlrad gegenüber dem Hohlradträger drehfest ist. Eine Drehung eines Planetenträgers, in dem das mindestens eine Planetenrad aufgenommen ist, wird dadurch über das mindestens eine Planetenrad auf die Sonnenwelle übertragen. Der Hohlradträger ist, bezogen auf eine Hauptdrehachse des Planetengetriebes, axial beidseitig mit je einer Gehäusekomponente verbunden. Die Gehäusekomponenten liegen jeweils zumindest abschnittsweise am Hohlradträger an und sind an diesem befestigt. Eine mechanische Last, die in eine der Gehäusekomponenten eingeleitet wird, wird dadurch auch in den Hohlradträger eingeleitet. Das Planetengetriebe verfügt über eine Mehrzahl an Stützarmen, die dazu ausgebildet sind, das Planetengetriebe abzustützen. Das Abstützen des Planetengetriebes umfasst das Aufnehmen eines im Hohlrad wirkenden Drehmoments, das durch den Betrieb des Planetengetriebes hervorgerufen wird, die Aufnahme von Querkräften aus dem Getriebeeigengewicht, sowie von außen einwirkende Querkräfte. Im Betrieb des Planetengetriebes werden die Lagerreaktionskräfte mit Betriebslasten, beispielsweise Drehmomente, kombiniert. Die Stützarme sind derartig dimensioniert und angeordnet, dass sie für eine Betriebsdauer des Getriebes der Kombination dieser mechanischen Lasten standhalten. Durch die Stützarme sind durch den Betrieb induzierte Lasten in einen Maschinenträger einleitbar, an dem das Planetengetriebe befestigt ist. Erfindungsgemäß weist das Planetengetriebe mindestens drei Stützarme auf.

Durch die mindestens drei Stützarme wird lokal eine Reduzierung der mechanischen Lasteinleitung in das Planetengetriebe erzielt. Hieraus ergibt sich eine gleichmäßigere Verteilung von mechanischen Beanspruchungen, die in den einzelnen Komponenten, also den Gehäusekomponenten und dem Hohlradträger, hervorgerufen werden. Eine solche weiter verteilte mechanische Lasteinleitung erlaubt es, die Beanspruchbarkeit der eingesetzten Komponenten stärker auszunutzen. Dadurch wird dem Leichtbauprinzip der erhöhten Werkstoffausnutzung Rechnung getragen. Dies wiederum erlaubt eine Erhöhung der durch das Planetengetriebe übertragenen mechanischen Leistung. Ferner erfordert die erfindungsgemäße Lösung keinen zusätzlichen Bauraum. Die lokale Reduzierung der mechanischen Lasteinleitung reduziert auch entsprechend lokale Spannungsmaxima, wodurch eine lokale Beanspruchbarkeit gesteigert wird. Gleichermaßen werden durch die Verwendung von mindestens drei Stützarmen die lokalen Verformungen an den Komponenten, also Gehäusekomponenten und Hohlradträger, vermindert, was zu einer verbesserten Dichtwirkung führt. Dies führt gleichermaßen zu reduzierten Verformungen am Hohlrad, was wiederum in einer verbesserten Lastverteilung in den dort vorliegenden Zahneingriffen und somit zu einer reduzierten Geräuschentwicklung im Betrieb führt. Stützarme können in einfacher Weise hergestellt werden, wodurch die Herstellung des erfindungsgemäßen Planetengetriebes wirtschaftlich ist. Das erfindungsgemäße Planetengetriebe ist sowohl für Industrieanwendungen als auch für Windkraftanlagen geeignet. In Windkraftanlagen kann mittels des erfindungsgemäßen Planetengetriebes in vorteilhafter Weise ein Triebstrangkonzept mit einer Dreipunktlagerung oder einer Vierpunktlagerung verwirklicht werden.

In einer weiteren Ausführungsform des Planetengetriebes sind mindestens zwei Stützarme lateral auf einer Seite des Planetengetriebes ausgebildet. Die Unterscheidung zwischen unterschiedlichen Seiten ergibt sich dabei in der bestimmungsmäßigen Einbauorientierung des Planetengetriebes entlang der Richtung einer Hauptdrehachse des Planetengetriebes durch eine im Wesentlichen mittige vertikale Teilungsebene. Eine derartige Anordnung der Stützarme erlaubt eine platzsparende Lagerung des Planetengetriebes, die gegenüber bekannten Lösungen keinen zusätzlichen Bauraum erfordert.

Darüber hinaus können im beanspruchten Planetengetriebe die lateral auf einer Seite angeordneten Stützarme an der gleichen Gehäusekomponente ausgebildet sein. Damit liegen auf der entsprechenden Seite mehrere mechanische Lasteinleitungen in die Gehäusekomponenten vor, was wiederum die entsprechenden mechanischen Lasten am Umfang der Gehäusekomponente verteilt. Die mindestens zwei Stützarme sind hierbei im Wesentlichen vertikal gestaffelt angeordnet, was eine effiziente Baumraumausnutzung darstellt. Ferner wird eine weitere Reduzierung der Verformungen des Hohlradträgers erzielt, der mit der entsprechenden Gehäusekomponente verbunden ist. Eine so erreichte Leistungsdichteerhöhung bietet auch eine verringerte Geräuschentwicklung im Betrieb. Ferner können entsprechende Gehäusekomponenten in einfacher Weise als Gussteile hergestellt werden.

Alternativ können die mindestens zwei lateral auf einer Seite des Planetengetriebes angeordneten Stützarme auch an einer Gehäusekomponente und dem Hohlradträger ausgebildet sein. Infolgedessen werden mechanische Lasten in separate Komponenten eingeleitet, was zu einer weiteren mechanischen Lastverteilung und einer stärkeren Werkstoffausnutzung führt. In einer Ausführungsform der beanspruchten Lösung können die Stützarme formschlüssig oder stoffschlüssig mit dem Hohlradträger und/oder der Gehäusekomponente verbunden sein. Hierdurch wird ebenfalls eine Reduzierung von lokalen Spannungsmaxima im Bereich der mechanischen Lasteinleitung erzielt, was in einer Leistungsdichtesteigerung, Geräuschminderung und einer verbesserten Dichtwirkung resultiert.

Weiter alternativ können die mindestens zwei lateral auf einer Seite des Planetengetriebes bzw. der entsprechenden Planetenstufe ausgebildeten Stützarme auch an zwei axial hintereinander angeordneten Gehäusekomponenten ausgebildet sein. Hierbei wird die Tragfähigkeit von zwei Verbindungen, vorzugsweise Flanschverbindungen, zwischen dem Hohlradträger und den Gehäusekomponenten ausgenutzt. Auch hierdurch wird eine gleichmäßigere Lastverteilung erzielt. Ein solcher Aufbau bietet eine effiziente Bauraumausnutzung und gegenüber bekannten Lösungen eine Gewichtsersparnis. Dies führt gleichermaßen zu reduzierten Verformungen am Hohlradträger und/oder Hohlrad, was wiederum in einer verbesserten Lastverteilung in den Zahneingriffen und somit zu einer reduzierten Geräuschentwicklung im Betrieb führt. Die beiden Gehäusekomponenten können vorzugsweise im Wesentlichen baugleich ausgebildet sein und so mit der gleichen Gussform hergestellt werden. Eine solche Gleichteilverwendung erlaubt eine einfachere, schnellere und kosteneffizientere Herstellung.

Darüber hinaus können die oben skizzierten Alternativen bei einem mehrstufigen Planetengetriebe auch je Planetenstufe mehrfach oder in unterschiedlicher Kombination ausgebildet sein. Weiter bevorzugt sind die entsprechenden Stützarme und ihre jeweilige Anordnung dabei symmetrisch auf beiden Seiten ausgebildet.

Darüber hinaus können die Stützarme beim beanspruchten Planetengetriebe jeweils an der Gehäusekomponente oder dem Hohlradträger als separate Bauteile angebracht sein. Eine solche Differentialbauweise erlaubt es, jeden der Stützarme mit einer erhöhten Präzision zu fertigen. Alternativ können die Stützarme auch an die jeweilige Gehäusekomponente oder den Hohlradträger angeformt sein, also einstückig ausgebildet sein. Die Gehäusekomponente bzw. der Hohlradträger ist dazu als Gussteil ausgebildet, was eine schnelle und wirtschaftliche Herstellung erlaubt. Ein angeformter Stützarm ist konstruktiv an erwartete mechanische Beanspruchungen weitestgehend frei anpassbar, beispielsweise über gekrümmte Konturen, an denen nur reduzierte Spannungsspitzen auftreten. Folglich ist ein angeformter Stützarm konstruktiv so weit anpassbar, dass die lokalen Spannungsminima am Übergang zur Gehäusekomponente oder zum Hohlradträger weiter reduziert werden. Dadurch werden die Vorzüge der beanspruchten Lösung weiter gesteigert.

Des Weiteren können die mindestens zwei Stützarme, die lateral auf einer Seite des Planetengetriebes angebracht sind, so angeordnet sein, dass sie eine gemeinsame Planetengetriebelagerung bilden. Dazu können die Stützarme benachbart oder aneinander anliegend ausgebildet sein. Durch eine solche Anordnung wird durch die so gebildete gemeinsame Planetengetriebelagerung eine mechanische Lasteinleitung für beide Stützarme gebildet. Die gemeinsame Planetenradlagerung stellt eine einzige Anbindungsstelle für das Planetengetriebe dar. Entsprechend wird der Montageaufwand für das Planetengetriebe reduziert. Eine solche Anordnung der Stützarme bietet ein hohes Maß an Gewichtsersparnis und Baumraumersparnis. Vorzugsweise sind die mindestens zwei Stützarme, die lateral auf einer Seite des Planetengetriebes angeordnet sind, mit zwei unterschiedlichen Gehäusekomponenten verbunden. Hierdurch werden zwei Verbindungen, vorzugsweise Flanschverbindungen, zwischen den Gehäusekomponenten und dem Hohlradträger ausgenutzt. Ferner wird der Hohlradträger zumindest im Bereich der Stützarme von den Gehäusekomponenten eingeschlossen. Dies führt auch zu reduzierten Verformungen am Hohlradträger und/oder Hohlrad, was wiederum zu einer verbesserten Lastverteilung in den dortigen Zahneingriffen und somit zu einer reduzierten Geräuschentwicklung führt. Gleichermaßen wird durch die gleichmäßigere mechanische Lasteinleitung in die Gehäusekomponenten und den Hohlradträger die Lebensdauer des Planetengetriebes erhöht.

Ferner kann beim beanspruchten Planetengetriebe jeder der Stützarme mit einem elastischen Lagerelement versehen sein, das eine Dämpfungswirkung bietet. Bei Verwendung des Planetengetriebes in einer Windenergieanlage die das elastische Federelement ferner zum Ausgleichen einer Rahmenverformung, die sich im Betrieb in einer Windradgondel ergeben kann. Darüber hinaus dient das elastische Lagerelement dazu, Schwingungen, die im Planetengetriebe vorliegen, vom Rahmen, und damit von der Windenergiegondel zu entkoppeln. Des Weiteren wird Körperschall aus dem Getriebe geführt und Montageungenauigkeiten durch die elastischen Federelemente ausgeglichen. Das elastische Lagerelement kann dabei beispielsweise aus einem Gummi oder einem entsprechend weichen Kunststoff hergestellt sein. An jedem Stützarm kann mindestens ein separates elastisches Lagerelement angebracht sein. Weiter bevorzugt sind je Stützarm zwei elastische Lagerelemente vorgesehen, die am Stützarm gegenüberliegend angeordnet sind und so im Betrieb eine Vibrationsdämpfung erlauben. Alternativ kann zwei benachbarten oder aneinander anliegenden Stützarmen einer gemeinsamen Planetengetriebelagerung ein gemeinsames elastisches Lagerelement zugeordnet sein. Weiter bevorzugt sind an der gemeinsamen Planetengetriebelagerung zwei gegenüberliegend angeordnete elastische Lagerelemente angebracht, die eine Vibrationsdämpfung bieten. Durch die elastischen Lagerelemente wird im Betrieb insgesamt eine weitere Geräuschminderung erzielt. Bei Verwendung in einer Windkraftanlage wird ferner durch die elastischen Lagerelemente die mechanische Beanspruchung der Gondel durch Vibrationslasten verringert. Die Gondel ist dabei mit einem Maschinenträger verbunden, auf dem das Planetengetriebe angeordnet ist. Dadurch wird insgesamt der Einfluss einer Verformung des Maschinenträgers auf das Betriebsverhalten des Getriebes verringert.

In einer weiteren Ausführungsform der beanspruchten Lösung ist mindestens eine Gehäusekomponente als Gussteil oder als Differentialbauteil ausgebildet. Eine Gehäusekomponente in Differentialbauweise kann mit einer erhöhten Fertigungspräzision hergestellt werden, wobei die Fertigung der einzelnen Komponenten parallel erfolgen kann. Durch die Differentialbauweise kann auch die Baugröße der einzelnen Komponenten reduziert werden. Die reduzierten Baugrößen bzw. Abmessungen der Komponenten erlauben einen vereinfachten Transport, beispielsweise per Container. Eine als Gussbauteil hergestellte Gehäusekomponente erlaubt ohne weiteres eine komplexe Geometrie beim Übergang von einem Stützarm in einen Bereich der Verbindung zum Hohlradträger, beispielsweise eine Geometrie mit gekrümmten Konturen. Eine gegossene Gehäusekomponente vereinfacht damit die Herstellung einer in puncto mechanische Lasteinleitung, mechanische Lastverteilung, lokale Spannungsmaxima-Reduzierung, etc. optimierte Konstruktion kosteneffizient zu verwirklichen. Die gleichen Vorteile gelten analog auch für einen Hohlradträger, der als Differentialbauteil oder als Gussteil ausgebildet sein kann. Ein Gussbauteil ist konstruktiv einfach an eine Vielzahl an Einsatzzwecken anpassbar und bei vorhandener Gussform kosteneffizient herstellbar.

Darüber hinaus kann das Hohlrad mit dem Hohlradträger einstückig ausgebildet sein oder lösbar mit dem Hohlradträger verbunden sein. Ein Hohlrad, das einstückig mit dem Hohlradträger ausgebildet ist, bietet eine vereinfachte Herstellung und erlaubt eine leichte und kompakte Bauweise bei reduzierter Bauteilanzahl. Ein Hohlrad, das lösbar mit dem Hohlradträger verbunden ist, beispielsweise über Schraubverbindungen, bietet eine mechanische Entkopplung zwischen dem Hohlrad und dem Hohlradträger, so dass eine weitere Geräuschminderung erzielbar ist. Ferner kann durch ein vom Hohlradträger lösbares Hohlrad in effizienter beanspruchungsgerecht ausgelegt werden. Beispielsweise kann der Einsatz hochleistungsfähiger und kostenintensiver Werkstoffe auf Bereiche konzentriert werden, wo deren Materialeigenschaften weitestgehend ausgeschöpft werden. Derartige hochleistungsfähige Werkstoffe können beispielsweise hochfeste Stahllegierungen sein.

Die skizzierte Aufgabenstellung wird auch durch einen erfindungsgemäßen Antriebsstrang für eine Windkraftanlage gelöst. Der Antriebsstrang umfasst eine Rotorwelle, die drehmomentübertragend mit einem Rotor der Windkraftanlage gekoppelt ist. Die Drehung des Rotors wird über die Rotorwelle auf ein Planetengetriebe übertragen, das auch zum Antriebsstrang gehört. Dabei dient die Rotorwelle als Eingangswelle. Ferner umfasst der Antriebsstrang einen Generator, der drehmomentübertragend mit dem Planetengetriebe verbunden ist und zur Gewinnung von elektrischer Energie ausgebildet ist. Der Antriebsstrang ist insgesamt in einer Gondel der Windkraftanlage angeordnet und unter anderem über das Planetengetriebe mit der Gondel mechanisch verbunden. Der erfindungsgemäße Antriebsstrang verfügt über ein Planetengetriebe, das gemäß zumindest einer der oben beschriebenen Ausführungsformen ausgebildet ist. Durch ein solches Planetengetriebe ist der Antriebsstrang im Bereich des Planetengetriebes platzsparend ausgebildet, was die Wartung des Antriebsstrangs vereinfacht. Ferner kann durch ein solches Planetengetriebe ein insgesamt größerer und/oder leistungsfähigerer Rotor verwendet werden und eine erhöhte Wellenleistung durch das Planetengetriebe geleitet werden.

Gleichermaßen wird die Aufgabenstellung durch die erfindungsgemäße Windkraftanlage gelöst. Die Windkraftanlage weist einen Rotor auf, der an einer Gondel drehbar angebracht ist und drehmomentübertragend mit einem Antriebsstrang zur Gewinnung von elektrischer Energie verbunden ist. Dabei ist der Antriebsstrang gemäß einer der oben skizzierten Ausführungsformen ausgebildet.

Die Erfindung wird im Folgenden anhand von Figuren einzelner Ausführungsformen beschrieben. Die Merkmale der Figuren und der obenstehenden Beschreibung sind dabei in gegenseitiger Ergänzung zu lesen und sind ohne weiteres untereinander kombinierbar. Es zeigt im Einzelnen:
- FIG 1: in einer Schrägansicht eine erste Ausführungsform des beanspruchten Planetengetriebes;
- FIG 2: in einer Schrägansicht eine zweite Ausführungsform des beanspruchten Planetengetriebes;
- FIG 3: in einer Explosionsdarstellung die zweite Ausführungsform des beanspruchten Planetengetriebes;
- FIG 4: in einer Schrägansicht eine dritte Ausführungsform des beanspruchten Planetengetriebes;
- FIG 5: eine geschnittene Schrägansicht einer erfindungsgemäßen Windkraftanlage.

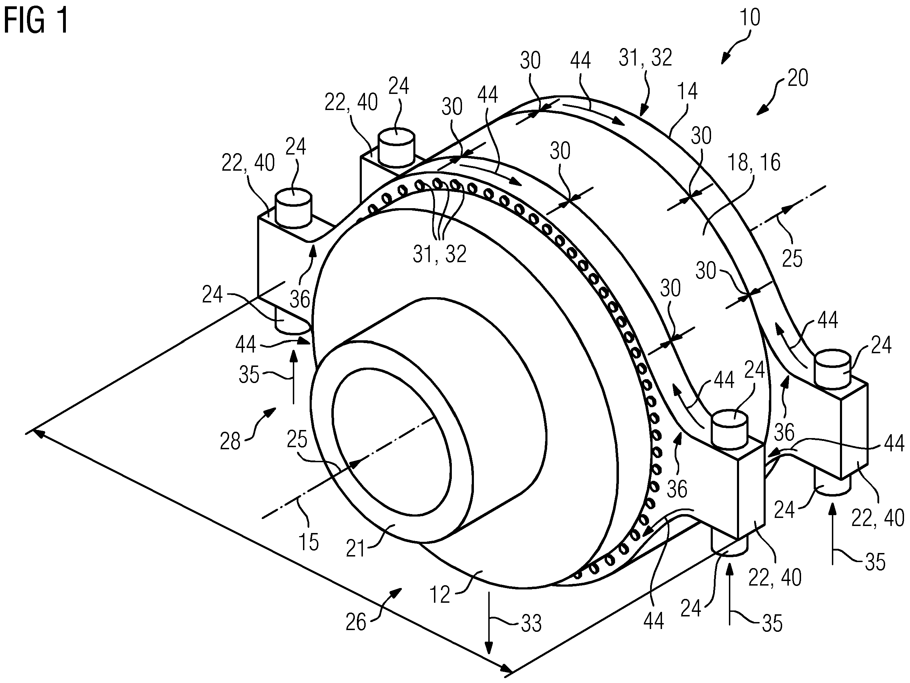

FIG 1 zeigt schematisch eine erste Ausführungsform des beanspruchten Planetengetriebes 10, das eine Planetenstufe 20 aufweist. Diese weist einen Hohlradträger 18 auf, in dem ein nicht näher dargestelltes Hohlrad 16 aufgenommen ist. Der Hohlradträger 18 liegt bezogen auf eine Hauptdrehachse 15 des Planetengetriebes 10 an einer ersten und einer zweiten Gehäusekomponente 12, 14 an. In einem radial äußeren Bereich sind die Gehäusekomponenten 12, 14 mit einer Mehrzahl an Ausnehmungen 31 versehen, in denen Befestigungselemente 32 aufgenommen sind. Die Befestigungselemente 32 sind dabei als Schrauben ausgebildet. Durch die Befestigungselemente 32 wird jeweils zwischen dem Hohlradträger 18 und den Gehäusekomponenten 12, 14 eine Anpresskraft 30 ausgeübt, und so eine Flanschverbindung 34 verwirklicht. Die Planetenstufe 20 des Planetengetriebes 10 weist eine Eingangswelle 21 auf, über die Wellenleistung 25 zugeführt wird und am axial entgegensetzten Ende aus der Planetenstufe 20 ausgeleitet wird. An der ersten und der zweiten Gehäusekomponente 12, 14 sind jeweils zwei Stützarme 22 ausgebildet, die an die Gehäusekomponenten 12, 14 angeformt sind. Dabei sind die Stützarme 22 entlang der Hauptdrehachse 15 axial voneinander beanstandet. Die Stützarme 22 sind im Wesentlichen symmetrisch auf beiden Seiten 26, 28 des Planetengetriebes 10 lateral angeordnet. Die Unterscheidung zwischen den beiden Seiten 26, 28 erfolgt dabei in der Einbauorientierung des Planetengetriebes 10 im Wesentlichen horizontal und ist in FIG 1 über einen entsprechenden Doppelpfeil ab gebildet. Das Planetengetriebe 10 ist an den Stützarmen 22 gelagert. Die Gewichtskraft 33 infolge des Eigengewichts des Planetengetriebes 10 wird durch die Stützarme 22 aufgenommen, an denen entsprechende Lagerreaktionskräfte 35 einwirken. Die Beträge der Lagerreaktionskräfte 35 ergeben sich aus der Montage- und Betriebssituation, insbesondere aus dem Drehmoment, das mit der Wellenleistung 25 auf das Planetengetriebe 10 übertragen wird. Jeder der Stützarme 22 dient somit als separate Planetengetriebelagerung 40. Die mechanische Last 44 ist durch die Verteilung auf die Stützarme 22 reduziert und stützt sich gegen die Flanschverbindungen 34 zwischen dem Hohlradträger 18 und den Gehäusekomponenten 12, 14 ab. Infolge der verteilten Einleitung der mechanischen Lasten 44 liegen im Bereich der Flanschverbindungen 34 reduzierte Spannungsmaxima vor. Je höher ein Spannungsmaximum in einer Flanschverbindung ausgebildet ist, umso höher ist die Neigung zum Verlust der Dichtwirkung der Flanschverbindung. Die Flanschverbindungen 34 weisen somit durch die verteilte Einleitung der mechanischen Lasten 44 eine verbesserte Dichtwirkung auf. Des Weiteren wird die mechanische Beanspruchung der Gehäusekomponenten 12, 14 und des Hohlradträgers 18 reduziert, was wiederum eine Steigerung der vom Planetengetriebe 10 übertragenen Wellenleistung 25 ermöglicht. Die Ausführungsform in FIG 1 bietet neben einer solchen Leistungsdichtesteigerung auch ein geringes Gewicht des Planetengetriebes. Insgesamt wird so eine erhebliche gewichtspezifische Leistungsdichtesteigerung erzielt. Ferner werden Verformungen der Gehäusekomponenten 12, 14 und des Hohlradträgers 18 reduziert, wodurch im Betrieb eine Geräuschminderung eintritt. Die erste und zweite Gehäusekomponente 12, 14 sind im Wesentlichen baugleich ausgebildet und sind in der gleichen Gussform herstellbar. Die Herstellung der Gehäusekomponenten 12, 14 ermöglicht eine einfache und schnelle Fertigung einer komplexen Geometrie der Stützarme 22 mit gekrümmten Konturen 36, die die Einleitung der mechanischen Lasten 44 weiter optimiert. Jeder der Stützarme 22 ist mit zwei gegenüberliegend angeordneten elastischen Federelementen 24 versehen. Die elastischen Federelemente 24 sind aus einem Gummi oder entsprechend weichem Material, beispielsweise Kunststoff, hergestellt und bieten im Betrieb eine Dämpfung von Vibrationslasten.

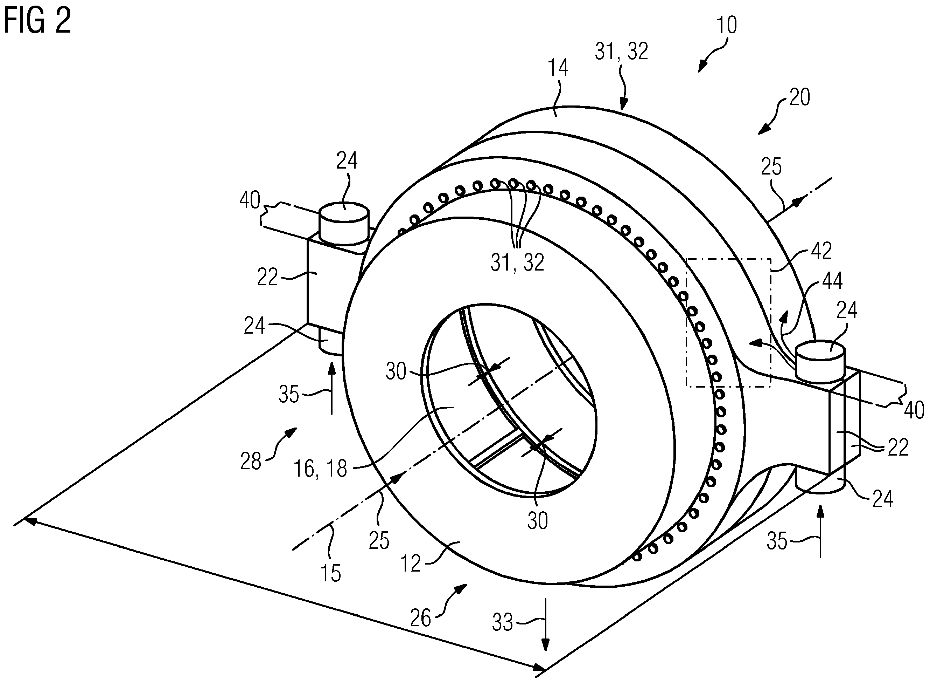

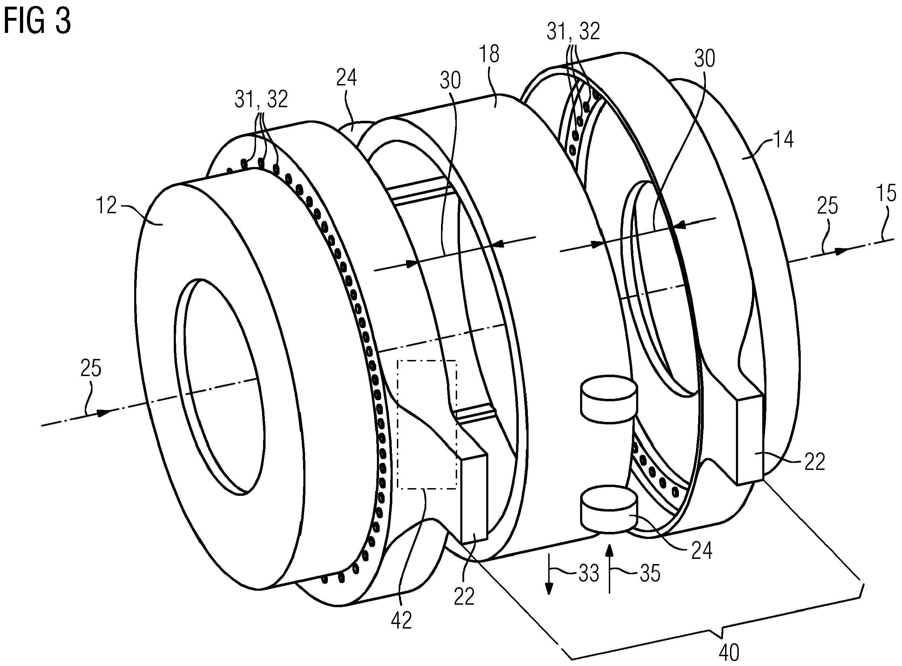

In FIG 2 und FIG 3 ist schematisch in einer Schrägansicht und in einer Explosionsansicht eine zweite Ausführungsform des beanspruchten Planetengetriebes 10 mit einer Planetenstufe 20 in einem teilmontierten Zustand abgebildet. Gleiche Bezugszeichen haben in FIG 2 und FIG 3 die gleiche technische Bedeutung wie in FIG 1. Das Planetengetriebe 10 umfasst eine erste und eine zweite Gehäusekomponente 12, 14, die jeweils mit einem Hohlradträger 18 verbunden sind. Der Hohlradträger 18 ist dazu ausgebildet, ein nicht näher dargestelltes Hohlrad 16 aufzunehmen. Die Verbindung zwischen den Gehäusekomponenten 12, 14 und dem Hohlradträger 18 wird jeweils über Befestigungselemente 32, die als Schrauben ausgebildet sind, gewährleistet, die in Ausnehmungen 31 in einem radialen Randbereich der Gehäusekomponenten 12, 14 aufgenommen sind. Durch die Befestigungselemente 32 wird jeweils zwischen dem Hohlradträger 18 und einer Gehäusekomponente 12, 14 eine Anpresskraft 30 ausgeübt. Das Planetengetriebe 10 ist dazu ausgebildet, dass ihm Wellenleistung 25 zugeführt wird und aus ihm ausgeleitet wird. Der Fluss an Wellenleistung 25 ist dabei durch eine Pfeilrichtung dargestellt. An die Gehäusekomponenten 12, 14 sind jeweils zwei Stützarme 22 lateral auf beiden Seiten 26, 28 angeformt. Die Unterscheidung der beiden Seiten 26, 28 erfolgt bezogen auf eine Hauptdrehachse 15 des Planetengetriebes 10 im Wesentlichen in horizontaler Richtung. Ein entsprechender Doppelpfeil zur Unterscheidung der beiden Seiten 26, 28 ist in FIG 2 und FIG 3 gezeigt. Die Stützarme 22 sind derart ausgebildet, dass sie miteinander in Kontakt stehen und paarweise je ein gemeinsames Planetengetriebelager 40 bilden. In jedes gemeinsame Planetengetriebelager 40 wird eine Lagerreaktionskraft 35 eingeleitet. Die Beträge der Lagerreaktionskräfte 35 ergeben sich dabei jeweils aus der Montage- und Betriebssituation. Jedes gemeinsame Planetengetriebelager 40 nimmt die jeweilige Lagerreaktionskraft 35 auf und leitet entsprechende mechanische Last 44 in die beiden Gehäusekomponenten 12, 14 ein. Dadurch, dass die Stützarme 22 auf beiden Seiten 26, 28 jeweils ein gemeinsames Planetengetriebelager 40 bilden, erfolgt eine geteilte Einleitung der mechanischen Last 44, was in FIG 2 durch einen verzweigten Pfeil abgebildet ist. Hierdurch erfolgt eine Reduzierung von mechanischen Beanspruchungen, insbesondere von lokalen Spannungsmaxima, in einem Übergangsbereich 42. Der Übergangsbereich 42 schließt sich in Umfangsrichtung an der jeweiligen Gehäusekomponente 12, 14 an den entsprechenden Stützarm 22 an. Infolge der dort vorliegenden Reduzierung von mechanischen Beanspruchungen liegt im Übergangsbereich 42 eine verbesserte Dichtwirkung vor. Ebenso werden im Übergangsbereich 42 Verformungen der Gehäusekomponenten 12, 14 reduziert, was wiederum die Verformungen des Hohlradträgers 18 verringert. Hieraus resultieren im Betrieb eine erhöhte Lebensdauer 10 der drehenden Komponenten des Planetengetriebes 10 und eine Geräuschminderung. Ferner ist jeder Stützarm 22 mit gegenüberliegenden elastischen Federelementen 24 versehen, die dazu geeignet sind, Vibrationslasten im Betrieb zu dämpfen. Dadurch wird in einem eingebauten Zustand in einer Windkraftanlage die Beanspruchung einer Gondel vermindert.

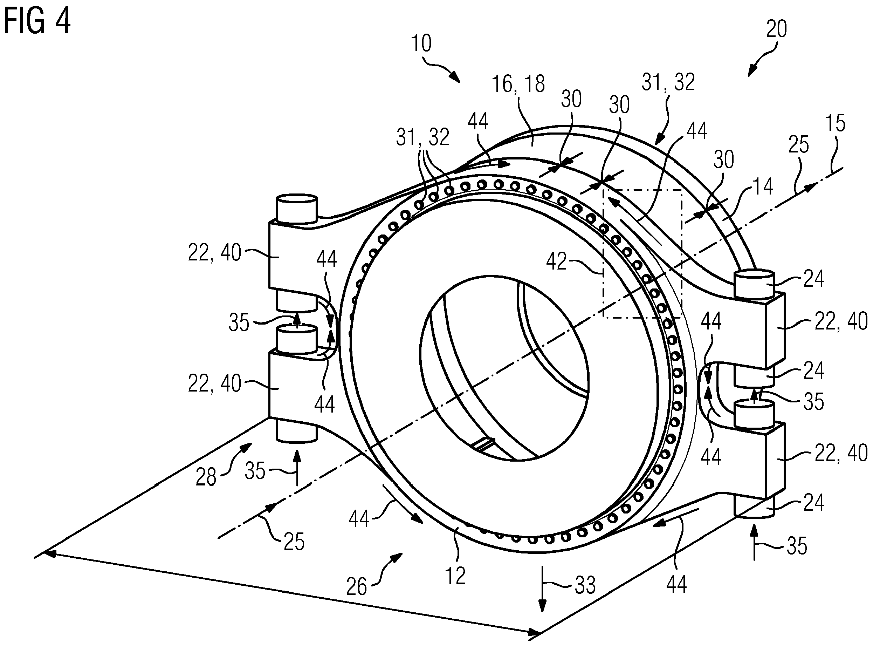

FIG 4 zeigt schematisch in einer Schrägansicht eine dritte Ausführungsform des beanspruchten Planetengetriebes 10 mit einer Planetenstufe 20 in einem teilmontierten Zustand dargestellt. Das Planetengetriebe 10 weist zwei Gehäusekomponenten 12, 14 auf, die jeweils mit einem Hohlradträger 18 verbunden sind. Der Hohlradträger 18 ist dazu ausgebildet, ein nicht näher dargestelltes Hohlrad 16 aufzunehmen. Das Planetengetriebe ist im montierten Zustand dazu ausgebildet, Wellenleistung 25 zu übertragen. Die Flussrichtung der Wellenleistung 25 ist in FIG 4 durch entsprechende Pfeile skizziert. Die Verbindung zwischen den Gehäusekomponenten 12, 14 wird über Befestigungselemente 32 gewährleistet, die in Ausnehmungen 31 aufgenommen sind, die in einem radialen Randbereich der Gehäusekomponenten 12, 14 ausgebildet sind. Die Befestigungselemente 32 sind beispielsweise als Schrauben ausgebildet und üben eine Anpresskraft 30 zwischen dem Hohlradträger 18 und jeweils den Gehäusekomponenten 12, 14 aus. Ferner ist auf jeder Seite 26, 28 am Planetengetriebe 10 lateral Stützarme 22 angeformt. Die Unterscheidung der beiden Seiten 26, 28 erfolgt dabei bezogen auf eine Hauptdrehachse 25 des Planetengetriebes 10 im Wesentlichen horizontal. Eine entsprechende Unterscheidung der Seiten 26, 28 ist in FIG 4 durch einen entsprechenden Doppelpfeil abgebildet. Die Stützarme 22 sind einstückig mit einer Gehäusekomponente 12 ausgebildet und sind entlang der Hauptdrehachse 15 im Wesentlichen an der gleichen axialen Position. Die Stützarme 22 sind auf jeder Seite 26, 28 im Wesentlichen baugleich ausgebildet und dienen jeweils als eine separate Planetengetriebelagerung 40. Eine Gewichtskraft 33 des Planetengetriebes 10 wird durch die Stützarme 22 aufgenommen, so dass in jeden Stützarm 22 eine Lagerreaktionskraft 35 eingeleitet wird. Die Beträge der Lagerreaktionskräfte 35 ergeben sich im Einzelnen aus der vorliegenden Montage- und Betriebssituation. Durch die vier Stützarme 22 erfolgen Einleitungen von mechanischen Lasten 44 verteilt am Umfang der Gehäusekomponente 12. Dadurch liegen in einem Übergangsbereich 42 an jedem Stützarm 22 reduzierte mechanische Beanspruchungen und reduzierte Verformungen auf. Infolgedessen liegt zwischen der Gehäusekomponente 12 und dem Hohlradträger 18 eine verbesserte Dichtwirkung vor. Ebenso wird durch die Reduzierung von Verformungen an der Gehäusekomponente 12 und dem Hohlradträger 18 im Betrieb die Geräuschentwicklung reduziert. Die reduzierten Verformungen am Hohlradträger 18 und der Gehäusekomponente 12 erhöht gleichermaßen die Lebensdauer der drehenden Komponenten im Planetengetriebe 10. Ferner ist jeder Stützarm 22 mit gegenüberliegenden elastischen Federelementen 24 versehen, die dazu geeignet sind, Vibrationslasten im Betrieb zu dämpfen. Die elastischen Federelemente 24 sind parallel geschaltet und sind hydraulisch miteinander verschaltbar. Dadurch wird in einem eingebauten Zustand in einer Windkraftanlage die Beanspruchung einer Gondel vermindert. Durch die hydraulische Verschaltbarkeit wird eine erforderliche Spannweite der Stützarme 22 reduziert.

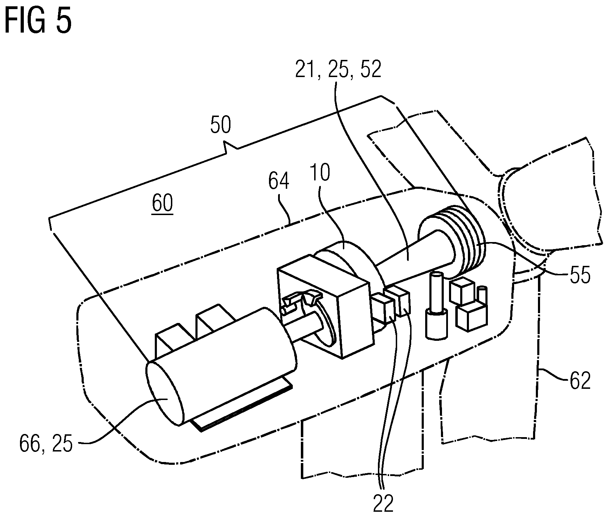

In FIG 5 ist in einer geschnittenen Schrägansicht eine Ausführungsform einer beanspruchten Windkraftanlage 60 dargestellt. Die Windkraftanlage 60 weist einen Rotor 62 auf, der drehbar in einem Rotorlager 55 aufgenommen ist. Das Rotorlager 55 ist in einer Gondel 64 angeordnet, in der ein Antriebsstrang 50 aufgenommen ist. Zum Antriebstrang 50 gehört eine Rotorwelle 52, durch die die Drehung des Rotors 62 in Form von Wellenleisten 25 an ein Planetengetriebe 10 übertragen wird. Dabei dient die Rotorwelle 52 als Eingangswelle 21, wie beispielsweise in FIG 1 skizziert. Dazu besteht zwischen der Rotorwelle 52 und dem Planetengetriebe 10 eine drehmomentübertragende Verbindung. Die Wellenleistung 25 wird mit einer veränderten Drehzahl vom Planetengetriebe 10 an einen Generator 66 übertragen. Durch den Generator 66 wird die übertragene Wellenleistung 25 in elektrische Energie umgewandelt. Das Planetengetriebe 10 ist dabei gemäß einer der oben beschriebenen Ausführungsformen ausgebildet. Durch die Mehrzahl an Stützarmen 22 erfolgt eine gleichmäßigere Verteilung der mechanischen Beanspruchungen bei einer Verbindung mit Der Gondel 64 bzw. einem nicht näher dargestellten Maschinenträger. Die axial hintereinander angeordneten Stützarme 22 reduzieren die lokale Beanspruchung der Azimutallager.

## Patentansprüche

1. Planetengetriebe (10), umfassend mindestens eine Planetenstufe (20) mit einem Hohlrad (16) in einem Hohlradträger (18), der beidseitig axial mit je einer Gehäusekomponente (12, 14) verbunden ist, und eine Mehrzahl an Stützarmen (22) zur Abstützung des Planetengetriebes (10), **dadurch gekennzeichnet, dass** das Planetengetriebe (10) mindestens drei Stützarme (22) aufweist.

2. Planetengetriebe (10) nach Anspruch 1, **dadurch gekennzeichnet, dass** mindestens zwei Stützarme (22) lateral auf einer Seite (26, 28) des Planetengetriebes (10) ausgebildet sind.

3. Planetengetriebe (10) nach Anspruch 1 oder 2, **dadurch gekennzeichnet, dass** die mindestens zwei Stützarme (22), die lateral auf einer Seite (26, 28) des Planetengetriebes (10) ausgebildet sind, an der gleichen Gehäusekomponente (12, 14), einer Gehäusekomponente (12, 14) und dem Hohlradträger (18), oder an zwei Gehäusekomponenten (12, 14) ausgebildet sind.

4. Planetengetriebe (10) nach einem der Ansprüche 1 bis 3, **dadurch gekennzeichnet, dass** mindestens einer der Stützarme (22) in Differentialbauweise ausgebildet ist, an eine Gehäusekomponente (12, 14) oder den Hohlradträger (18) angeformt ist.

5. Planetengetriebe (10) nach einem der Ansprüche 1 bis 4, **dadurch gekennzeichnet, dass** zwei Stützarme (22) eine gemeinsame Planetengetriebelagerung (40) ausbilden.

6. Planetengetriebe (10) nach einem der Ansprüche 1 bis 5, **dadurch gekennzeichnet, dass** mindestens einer der Stützarme (22) mit mindestens einem elastischen Lagerelement (24) versehen ist.

7. Planetengetriebe (10) nach einem der Ansprüche 1 bis 6, **dadurch gekennzeichnet, dass** jede Gehäusekomponente (12, 14) über eine Flanschverbindung (34) mit dem Hohlradträger (18) lösbar verbunden ist.

8. Planetengetriebe (10) nach einem der Ansprüche 1 bis 7, **dadurch gekennzeichnet, dass** mindestens eine Gehäusekomponente (12, 14) als Gussteil oder als Differentialbauteil ausgebildet ist.

9. Planetengetriebe (10) nach einem der Ansprüche 1 bis 8, **dadurch gekennzeichnet, dass** das Hohlrad (16) mit dem Hohlradträger (18) einstückig ausgebildet ist oder lösbar mit dem Hohlradträger (18) verbunden ist.

10. Antriebsstrang (50) für eine Windkraftanlage (60), umfassend eine Rotorwelle (52), die drehmomentübertragend mit einem Rotor (62) einer Windkraftanlage (60) koppelbar ist, ein Planetengetriebe (10) und einen Generator (66), **dadurch gekennzeichnet, dass** das Planetengetriebe (10) nach einem der Ansprüche 1 bis 9 ausgebildet ist.

11. Windkraftanlage (60), umfassend einen Rotor (62), der an einer Gondel (64) angeordnet ist, und in der Gondel (64) ein Antriebsstrang (50) zur Gewinnung elektrischer Energie angeordnet ist, **dadurch gekennzeichnet, dass** der Antriebsstrang (50) gemäß Anspruch 10 ausgebildet ist.
